(19) Europäisches Patentamt
European Patent Office
Office européen des brevets

(11) **EP 3 538 843 B1**

(12) **EUROPÄISCHE PATENTSCHRIFT**

(45) Veröffentlichungstag und Bekanntmachung des Hinweises auf die Patenterteilung:
**07.08.2024  Patentblatt 2024/32**

(21) Anmeldenummer: **17797146.2**

(22) Anmeldetag: **09.11.2017**

(51) Internationale Patentklassifikation (IPC):
**G01C 21/16** (2006.01)    **G01S 19/41** (2010.01)
**G01S 7/48** (2006.01)    **G01S 13/86** (2006.01)
**G01S 13/931** (2020.01)    **G01S 17/86** (2020.01)
**G01S 17/931** (2020.01)    **G01S 19/40** (2010.01)
**G01S 19/49** (2010.01)

(52) Gemeinsame Patentklassifikation (CPC):
**G01S 19/41; G01S 7/4808; G01S 13/86;**
**G01S 13/931; G01S 17/86; G01S 17/931;**
**G01S 19/40; G01S 19/49**

(86) Internationale Anmeldenummer:
**PCT/EP2017/078814**

(87) Internationale Veröffentlichungsnummer:
**WO 2018/087257 (17.05.2018 Gazette 2018/20)**

(54) **SCHÄTZEN EINER EIGENPOSITION**

ESTIMATION OF AN INDIVIDUAL POSITION

ESTIMATION D'UNE POSITION PROPRE

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **14.11.2016  DE 102016222272**

(43) Veröffentlichungstag der Anmeldung:
**18.09.2019  Patentblatt 2019/38**

(73) Patentinhaber: **Volkswagen Aktiengesellschaft 38440 Wolfsburg (DE)**

(72) Erfinder:
• **MERFELS, Christian**
**38102 Braunschweig (DE)**
• **HEHN, Thorsten**
**38446 Wolfsburg (DE)**
• **GEPPERT, Marcel**
**79112 Freiburg (DE)**

(56) Entgegenhaltungen:
**EP-A1- 1 988 408      WO-A1-2009/039587**
**DE-T2- 69 034 047**

• **A C ESCHER ET AL: "GPS/IRS HYBRIDIZATION: DEFINITION OF EXCLUSION RADIUS USING SOLUTION SEPARATION METHOD", 31 December 2002 (2002-12-31), XP055144054, Retrieved from the Internet <URL:http://telecom.recherche.enac.fr/data/doc. ltst/2002/GPS-IRS Hybridization Definition of Exclusion Radius using Solution Separation Method.pdf> [retrieved on 20141002]**

**Beschreibung**

Die vorliegende Erfindung betrifft eine Vorrichtung und ein Verfahren zum Schätzen einer Eigenposition, insbesondere zum Schätzen einer Eigenposition eines Fahrzeugs.

Eine Bestimmung oder Schätzung einer Eigenposition eines Fahrzeugs wird bei vielen Fahrzeugen verwendet, um einen Fahrer des Fahrzeugs mithilfe eines Navigationssystems beim Erreichen eines Zielorts zu unterstützen. Das Fahrzeug kann beispielsweise einen Personenkraftwagen, einen Lastkraftwagen, ein Schiff oder ein Flugzeug oder ein beliebiges Land-, Wasser- oder Luftfahrzeug umfassen. Die Eigenposition des Fahrzeugs kann beispielsweise mit einem globalen Satellitennavigationssystem, wie zum Beispiel GPS, auf einige Meter genau bestimmt werden. Eine derartige Genauigkeit ist im Allgemeinen für eine Zielführung mithilfe eines Navigationssystems ausreichend, obwohl eine höhere Genauigkeit Vorteile bietet. Beispielsweise kann mit einer höheren Genauigkeit eine Fahrspurauswahl unterstützt und überprüft werden oder ein Abbiegen genauer angezeigt werden. Daher werden üblicherweise Daten von einem globalen Satellitennavigationssystem mit beispielsweise Odometriedaten des Fahrzeugs mittels einer Datenfusion kombiniert, um eine Genauigkeit der Bestimmung oder Schätzung der Eigenposition zu erhöhen.

Eine weitere Anwendung der Bestimmung oder Schätzung der Eigenposition liegt in einer automatischen Fahrzeugführung. Für automatische Fahrfunktionen ist eine hochgenaue Selbstlokalisierung des Fahrzeugs eine wichtige Aufgabe, um beispielsweise Abstände zum Fahrbahnrand, zu anderen Fahrzeugen oder Objekten in der Umgebung bestimmen zu können.

Die DE 69034047 T2 betrifft beispielsweise ein integriertes Fahrzeugpositionier- und Navigationssystem. Ein computerbasiertes System zur autonomen Navigation eines Fahrzeug entlang eines vorbestimmten Pfades weist erste Mittel zum Bestimmen eines Ortes des Fahrzeugs und zweite Mittel, um zu veranlassen, dass das Fahrzeug dem vorbestimmten Pfad folgt, auf. Die ersten Mittel umfassen ein erstes Positionsbestimmungssystem, welches geeignet ist, eine erste Positionsabschätzung des Fahrzeugs basierend auf ersten Signalen von einem terrestrischen Positionsbestimmungssystem zu bestimmen. Die ersten Mittel umfassen ferner ein zweites Positionsbestimmungssystem, um eine zweite Positionsabschätzung des Fahrzeugs basierend auf zweiten Signalen durchzuführen, welche von einer Inertial-Bezugseinheit und von einem Fahrzeugtachometer erhalten werden. Die ersten Mittel umfassen schließlich ein Verarbeitungssystem, um eine dritte Positionsabschätzung des Fahrzeugs aus einer gewichteten Kombination der ersten Positionsabschätzung und der zweiten Positionsabschätzung zu bestimmen. Das System weist ferner dritte Mittel auf, um zu bewirken, dass das Fahrzeug Hindernisse detektiert und vermeidet, während es dem vorbestimmten Pfad folgt.

Die Veröffentlichung von A.C. Escher et al. "GPS/IRS HYBRIDIZATION: DEFINITION OF EXCLUSION RADIUS USING SOLUTION SEPARATION METHOD" (31. Dezember 2002 (2002-12-31), XPO55144054) offenbart in mit Fig. 7 eine Verwendung von Kalman-Filtern, um Fehler eines Trägheitsnavigationssystems unter Verwendung von GPS-Messungen zu schätzen, um Ausgaben des Trägheitsnavigationssystems zu korrigieren.

Die EP 1 988 408 B1 betrifft ein Positionsbestimmungssystem. Eine Satelliten-basierte Position und eine trägheitsnavigationsbasierte Position werden in eine Schätzeinheit eingegeben. Basierend auf den eingegebenen Positionen und vorher erfassten Positionen schätzt die Schätzeinheit Fehler der eingegebenen Positionen und berechnet dadurch einen Korrekturwert für die trägheitsnavigationsbasierte Position.

Bei einer Kombination von Positionsabschätzungen von verschiedenen Positioniersystemen kann es sinnvoll sein, mögliche Positionierungsfehler der verschiedenen Positioniersysteme zu berücksichtigen.

In diesem Zusammenhang offenbart die EP 0161688 A2 ein Navigationsverfahren für Fahrzeuge. Eine Navigationsanlage erhält Signale von sowohl fahrzeugeigenen Sensoren als auch von zusätzlichen Eingabemitteln. Die fahrzeugeigenen Sensoren umfassen Sensoren wie Kurs- und Geschwindigkeits- oder Weggeber. Die zusätzlichen Eingabemittel sind beispielsweise manuelle Eingaben des Standorts oder Empfangseinrichtungen für Funk- oder Satellitennavigationsverfahren, beispielsweise GPS. Deterministische Kurs- und Geschwindigkeitsfehler sowie stochastische Kursfehlerkomponenten und stochastische Fahrzeuglängsbewegungsfehleranteile werden mithilfe eines Kalman-Filters kompensiert. Eine mathematische Modellierung der bei den Positionsfixen (von z.B. GPS) auftretenden Fehler erfolgt unter der Annahme, dass diese sich durch Gausssches weißes, d.h. normalverteiltes unkorreliertes Rauschen beschreiben lassen.

Häufig treten in der Praxis jedoch Fälle auf, bei denen Positionsmessungen von Positioniersystemen, beispielsweise globalen Satellitennavigationssystemen, einen autokorrelierten Fehler aufweisen.

Aufgabe der vorliegenden Erfindung ist es daher, autokorrelierte Fehler von Positionsmessungen bei einer Bestimmung einer Eigenposition zu berücksichtigen und zu kompensieren.

Diese Aufgabe wird gemäß der vorliegenden Erfindung durch ein Verfahren zur Schätzung einer Eigenposition nach Anspruch 1 und eine entsprechende Vorrichtung nach Anspruch 8 gelöst. Die abhängigen Ansprüche definieren Ausführungsformen der Erfindung.

Gemäß der vorliegenden Erfindung wird ein Verfahren zur Schätzung einer Eigenposition bereitgestellt. Bei dem Verfahren wird mindestens eine erste Positionsmessung durch ein erstes Positioniersystem bereitgestellt und mindestens eine zweite Positionsmessung durch mindestens ein zweites Positioniersystem bereitgestellt. Ferner wird eine dritte Positionsmessung durch das erste Positioniersystem bereitgestellt. Die dritte Positionsmessung erfolgt zeitlich nach der ersten und der mindestens einen zweiten Positionsmessung. Die Eigenposition wird in Abhängigkeit von zumindest der dritten Positionsmessung und mindestens einem Positionsfehlerwert geschätzt. Der Positionsfehlerwert wird in Abhängigkeit von der mindestens einen ersten Positionsmessung und der mindestens einen zweiten Positionsmessung bestimmt.

Anders ausgedrückt stehen ein erstes Positioniersystem und mindestens ein zweites Positioniersystem zur Verfügung. Beide Positioniersysteme liefern beispielsweise fortlaufend Positionsmessungen. Der Positionsfehlerwert wird in Abhängigkeit von vergangenen Positionsmessungen (der mindestens einen ersten Positionsmessung) des ersten Positioniersystems und vergangenen Positionsmessungen (der mindestens einen zweiten Positionsmessung) des mindestens einen zweiten Positioniersystems bestimmt. Eine aktuelle Positionsmessung (die dritte Positionsmessung) von dem ersten Positioniersystem wird in Verbindung mit dem Positionsfehlerwert zur Schätzung der Eigenposition verwendet. Dabei wird die aktuelle Positionsmessung durch den Positionsfehlerwert korrigiert.

Dadurch kann folgender Vorteil erreicht werden. Messfehler von vielen Positioniersystemen weisen neben einer zufälligen Messfehlerverteilung (weißes Rauschen) auch zeitlich autokorrelierte Eigenschaften auf. Zeitlich autokorrelierte Eigenschaften von zwei unterschiedlichen Positioniersystemen sind jedoch im Allgemeinen auch unterschiedlich, sodass der Positionsfehlerwert eine andere autokorrelierte Eigenschaft als die Positionsmessungen von dem ersten Positioniersystem aufweist. Dadurch kann der Autokorrelationseinfluss verringert werden, es findet eine sogenannte Dekorrelation statt. Insbesondere für den Fall, dass die Positionsmessungen des zweiten Positioniersystems keine autokorrelierten Eigenschaften aufweist, kann ein Einfluss der Autokorrelation bei den Messfehlern von dem ersten Positioniersystem signifikant verringert werden. Je nach Autokorrelationseigenschaften des ersten Positioniersystems können mehrere Positionsfehlerwerte bei der Schätzung der Eigenposition zur Korrektur der Positionsmessung (der dritten Positionsmessung) verwendet werden. Ein jeweiliger Positionsfehlerwert kann beispielsweise in Abhängigkeit von entsprechenden vergangenen ersten und zweiten Positionsmessungen bestimmt werden.

Gemäß einer Ausführungsform wird ein jeweiliger Positionsfehlerwert des mindestens einen Positionsfehlerwerts als ein Differenzwert zwischen einer ersten Positionsmessung der mindestens einen ersten Positionsmessung und einer zweiten Positionsmessung der mindestens einen zweiten Positionsmessung bestimmt. Beispielsweise können zu drei Zeitpunkten jeweils eine erste Positionsmessung und eine zweite Positionsmessung erfolgen. Ein Positionsfehler wird für den ersten Zeitpunkt wird als eine Differenz zwischen der ersten Positionsmessung und der zweiten Positionsmessung zu dem jeweiligen ersten Zeitpunkt bestimmt. Ein Positionsfehler Wert für den zweiten Zeitpunkt wird als eine Differenz zwischen der ersten Positionsmessung zu dem zweiten Zeitpunkt und der zweiten Positionsmessung zu dem zweiten Zeitpunkt bestimmt. Ein Positionsfehlerwert für den dritten Zeitpunkt wird demzufolge als eine Differenz zwischen der ersten und zweiten Positionsmessung zu dem jeweiligen dritten Zeitpunkt bestimmt. In Abhängigkeit von der Autokorrelationseigenschaft der Positionsmessungen von dem ersten Positioniersystem können eine geeignete Anzahl von Positionsfehlerwerten auf einfache Art und Weise bereitgestellt werden und zur Korrektur der aktuellen Positionsmessung verwendet werden.

Bei dem Verfahren wird ferner eine Autokorrelationsordnung A für Positionsmessungen von dem ersten Positioniersystem bereitgestellt. Die Eigenposition wird in Abhängigkeit von zumindest der dritten Positionsmessung und von A Positionsfehlerwerten geschätzt. Die A Positionsfehlerwerte werden in Abhängigkeit von A ersten Positionsmessungen und A zweiten Positionsmessungen bestimmt. Die Autokorrelationsordnung A kann auf der Grundlage eines entsprechenden Autokorrelationsmodells, beispielsweise über Referenzpositionsmessungen vorab, d.h. offline, bestimmt werden. Alternativ ist die Bestimmung der Autokorrelationsordnung A auch online möglich. Anhand der Autokorrelationsordnung A kann beispielsweise die Anzahl der erforderlichen Positionsfehlerwerte bestimmt werden. Beispielsweise können für eine Autokorrelationsordnung von drei jeweils drei Positionsfehlerwerte bei der Schätzung der Eigenposition berücksichtigt werden. Durch die Bestimmung der Autokorrelationsordnung kann auf einfache Art und Weise eine geeignete Anzahl von erforderlichen Positionsfehlerwerten festgelegt werden, um eine geeignete Korrektur und somit Schätzung der Eigenposition zu ermöglichen.

Beispielsweise mithilfe des Autokorrelationsmodells können ferner entsprechende Autokorrelationskoeffizienten bereitgestellt werden, welche bei der Schätzung der Eigenposition ferner berücksichtigt werden. Gemäß der Ordnung A kann eine entsprechende Anzahl von A Autokorrelationskoeffizienten bereitgestellt werden und die Eigenposition in Abhängigkeit von zusätzlich diesen A Autokorrelationskoeffizienten geschätzt werden. In dem obigen Beispiel, in welchem drei Positionsfehlerwerte bei der Schätzung der Eigenposition berücksichtigt wurden, kann die Autokorrelationsordnung beispielsweise drei betragen und somit können zusätzlich drei Autokorrelationskoeffizienten berücksichtigt werden.

Erfindungsgemäß wird die Eigenposition gemäß der folgenden Gleichung geschätzt:

$$c_i^a = z_i^a - \sum_{j=1}^{A} \gamma_j \left( z_{i-j}^a - z_{i-j}^w \right)$$

Dabei bezeichnet $c_i^a$ die Eigenposition, und i verschiedene Zeitpunkte für Positionsmessungen. Positionsmessungen mit dem ersten Positioniersystem werden mit $z^a$ bezeichnet und Messungen mit dem zweiten Positioniersystem mit $z^w$. Der aktuelle Zeitpunkt ist beispielsweise der Zeitpunkt i und somit ergeben sich die vorhergehenden vergangenen Zeitpunkte zu i - j mit einem j, welches von 1 bis zur Autokorrelationsordnung A gezählt wird. Gemäß der obigen Definition wird somit die dritte Positionsmessung, also die aktuelle Positionsmessung von dem ersten Positioniersystem, mit $z_i^a$ bezeichnet. Die ersten Positionsmessungen zu den vergangenen Zeitpunkten i-1 bis i-A werden mit $z_{i-j}^a$ bezeichnet. Die zweiten Positionsmessungen zu den vergangenen Zeitpunkten i-1 bis i-A werden mit $z_{i-j}^w$ bezeichnet. $\gamma_j$ mit j=1 bis A bezeichnet die A Autokorrelationskoeffizienten.

Die Rechenoperationen der obigen Gleichung sind mit verhältnismäßig einfachen Rechenmitteln in kurzer Zeit durchführbar, sodass die Eigenposition schnell und auf einfache Art und Weise bestimmt werden kann. Auch bei steigender Autokorrelationsordnung A steigt die Komplexität der Berechnung lediglich linear an.

Gemäß einer Ausführungsform umfassen die mindestens eine erste Positionsmessung, die mindestens eine zweite Positionsmessung und die dritte Positionsmessung jeweils absolute Positionsmessungen. Absolute Positionsmessungen zeigen eine absolute geographische Position an, beispielsweise in Form von Längen- und Breitengraden sowie optional einer Höheninformation. Entsprechende erste und zweite Positioniersysteme können beispielsweise satellitengestützte globale Positioniersysteme oder terrestrisch gestützte globale Positioniersysteme umfassen, wie zum Beispiel Positioniersysteme, welche auf Mobilfunksystemen beruhen. Weitere Positioniersysteme, welche absolute Positionsmessungen bereitstellen, können beispielsweise Kamera-, Laser-, Radar- oder ultraschallbasierte Positioniersysteme umfassen, welche in Verbindung mit detailliertem Kartenmaterial oder Umgebungsmaterial eine Position durch Abgleichen einer erfassten Umgebungsinformation mit dem Kartenmaterial oder Umgebungsmaterial bestimmen.

Gemäß einer weiteren Ausführungsform umfassen die mindestens eine erste Positionsmessung, die mindestens eine zweite Positionsmessung und die dritte Positionsmessung jeweils relative Positionsmessungen. Relative Positionsmessungen zeigen relative geographische Positionen in Bezug auf eine jeweilige vorhergehende Positionsmessung an. Relative Positionsmessungen können beispielsweise mithilfe von Fahrzeugsensoren erfasst werden, welche eine Bewegung des Fahrzeugs ermitteln. Derartige Sensoren werden auch als Odometriesensoren bezeichnet. Odometriesensoren umfassen beispielsweise Geschwindigkeitssensoren, Beschleunigungssensoren und Lenkwinkelsensoren. Relative Positionsmessungen können darüber hinaus auch auf Kamera-, Laser-, Radar- oder ultraschallbasierten Systemen beruhen, indem eine relative Lageänderung des Fahrzeugs zu der Umgebung mithilfe dieser Systeme bestimmt wird.

Das obige Verfahren lässt sich daher gleichermaßen sowohl für Positioniersysteme, welche absolute geographische Positionen anzeigen, als auch für Positioniersysteme, welche relative geographische Positionen anzeigen, verwenden. Wie aus der obigen Gleichung ersichtlich ist, können vorzugsweise Positionsmessungen von Positioniersystemen der gleichen Klasse auf einfache Art und Weise miteinander kombiniert werden. Anders ausgedrückt, ist das zuvor beschriebene Verfahren besonders geeignet, um entweder nur absolute Positionsmessungen miteinander zu kombinieren oder nur relative Positionsmessungen miteinander zu kombinieren.

Bei einer weiteren Ausführungsform wird die Eigenposition unter Verwendung von Q Positionsbestimmungsquellen geschätzt. Q beträgt dabei mindestens drei, d.h., es stehen mindestens drei verschiedene Positionsbestimmungsquellen zur Verfügung. Eine jeweilige vorläufige Eigenposition wird für jedes k von 1 bis Q mit dem zuvor beschriebenen Verfahren geschätzt. Es werden somit Q vorläufige Eigenpositionen geschätzt. Die Positionsbestimmungsquelle k wird dabei als das erste Positioniersystem in dem zuvor beschriebenen Verfahren verwendet. Die übrigen Positionsbestimmungsquellen, d.h. die Positionsbestimmungsquellen von 1 bis Q ohne k, werden als das mindestens eine zweite Positioniersystem verwendet. Jede Positionsmessung der mindestens einen zweiten Positionsmessung wird durch kombinieren von Positionsmessungen der Positionsbestimmungsquellen 1 bis Q ohne k bestimmt.

Die Q vorläufigen Eigenpositionen werden somit bestimmt, indem eine der Positionsbestimmungsquellen als das erste Positioniersysteme verwendet wird und die übrigen Positionsbestimmungsquellen als das zweite Positioniersystem. Dabei werden die Positionsbestimmungsquellen derart durchgewechselt, dass jede Positionsbestimmungsquelle einmal als erstes Positioniersystem verwendet wird. Es ergeben sich Q vorläufige Eigenpositionen, welche zu der endgültigen Eigenposition kombiniert werden. Dadurch kann das zuvor beschriebene Verfahren auch mit mehr als zwei Positionsbestimmungsquellen verwendet werden. Die vorläufigen Eigenpositionen beruhen somit im Prinzip auf einer Dekorrelation der Positionsmessung einer Positionsbestimmungsquelle unter Verwendung von Positionsmessungen der übrigen Positionsbestimmungsquellen. So wird jede Positionsmessung der verschiedenen Positionsbestimmungsquellen einmal unter Verwendung der übrigen Positionsbestimmungsquellen dekorreliert und die so dekorrelierten vorläufigen Eigenpositionen zu der endgültigen Eigenposition kombiniert.

Gemäß der vorliegenden Erfindung wird ferner eine Vorrichtung bereitgestellt, welche eine Schnittstelle und mindestens einen Prozessor umfasst. Die Schnittstelle ist in der Lage, Positionsmessungen von einem ersten Positioniersystem und Positionsmessungen von mindestens einem zweiten Positioniersystem zu empfangen. Der Prozessor ist ausgestaltet, die folgenden Schritte durchzuführen. Zunächst stellt der Prozessor mindestens eine erste Positionsmessung von dem ersten Positioniersystem bereit. Ferner stellt der Prozessor mindestens eine zweite Positionsmessung von dem mindestens einen zweiten Positioniersystem bereit. Eine dritte Positionsmessung wird von dem Prozessor basierend auf dem ersten Positioniersystem bereitgestellt. Die dritte Positionsmessung erfolgt zeitlich nach der ersten und zweiten Positionsmessung. Die Eigenposition wird von dem Prozessor in Abhängigkeit von zumindest der dritten Positionsmessung und mindestens einem Positionsfehlerwert geschätzt. Der Positionsfehlerwert wird von dem Prozessor in Abhängigkeit von der mindestens einen ersten Positionsmessung und der mindestens einen zweiten Positionsmessung bestimmt. Der Prozessor ist ferner eingerichtet, eine Autokorrelationsordnung A für Positionsmessungen von dem ersten Positioniersystem bereitzustellen, wobei die Eigenposition in Abhängigkeit von zumindest der dritten Positionsmessung und von A Positionsfehlerwerten geschätzt wird, welche in Abhängigkeit von A ersten Positionsmessungen und A zweiten Positionsmessungen bestimmt werden. Die mindestens eine erste Positionsmessung kann mehrere Positionsmessungen umfassen, welche zeitlich nacheinander vor der dritten Positionsmessung erfolgten. Ebenso kann die mindestens eine zweite Positionsmessung mehrere Positionsmessungen umfassen, welche zeitlich nacheinander vor der dritten Positionsmessung erfolgten. Vorzugsweise werden die ersten Positionsmessungen und die zweiten Positionsmessungen zu näherungsweise gleichen Zeitpunkten erfasst, also paarweise. Entsprechende Positionsfehlerwerte können aus entsprechenden Paaren von ersten und zweiten Positionsmessungen bestimmt werden.

Erfindungsgemäß ist die Vorrichtung zur Durchführung des zuvor beschriebenen Verfahrens ausgestaltet und umfasst daher auch die im Zusammenhang mit dem Verfahren beschriebenen Vorteile.

In der vorhergehenden Beschreibung wurden Ausführungsformen der Erfindung unabhängig voneinander beschrieben. Die Ausführungsformen können jedoch beliebig miteinander kombiniert werden.

Die vorliegende Erfindung wird nachfolgend unter Bezugnahme auf die Zeichnungen im Detail beschrieben werden.

Figur 1 zeigt schematisch ein Fahrzeug mit einer Vorrichtung gemäß einer Ausführungsform der vorliegenden Erfindung.

Figur 2 zeigt schematisch Verfahrensschritte eines Verfahrens gemäß einer Ausführungsform der vorliegenden Erfindung.

Figur 3 zeigt schematisch Verfahrensschritte eines Verfahrens gemäß einer weiteren Ausführungsform der vorliegenden Erfindung.

Die vorliegende Erfindung wird nachfolgend anhand verschiedener Ausführungsformen unter Bezugnahme auf die Figuren beschrieben werden.

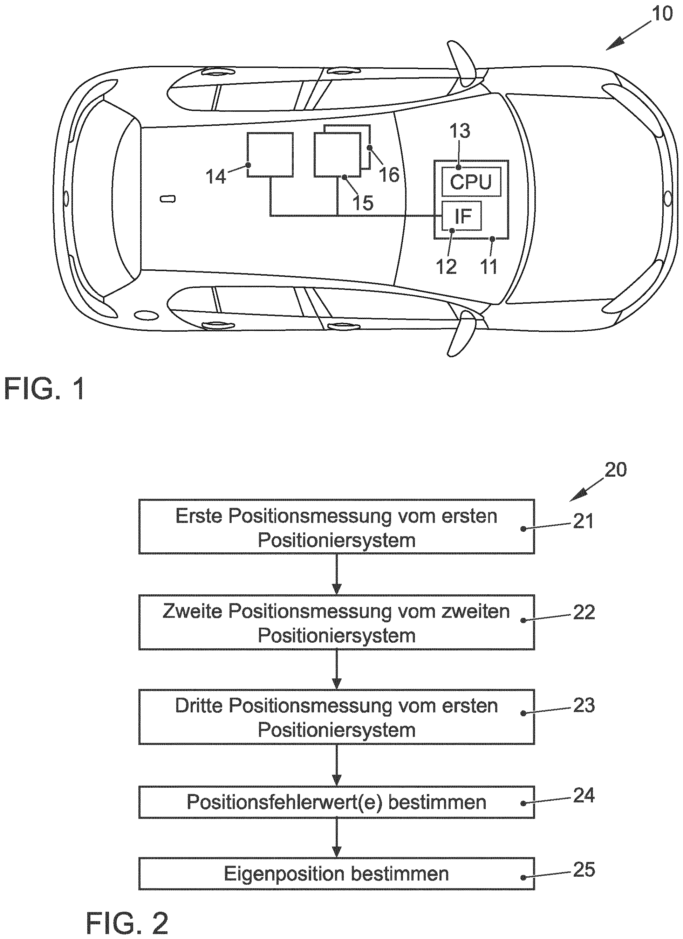

Figur 1 zeigt ein Fahrzeug 10 mit einer Vorrichtung 11, welche in der Lage ist, eine Eigenposition des Fahrzeugs 10 zu schätzen. Die Vorrichtung 11 umfasst eine Schnittstelle (IF) 12 und einen Prozessor (CPU) 13. Über die Schnittstelle 12 ist die Vorrichtung 11 mit einem ersten Positioniersystem 14 und mehreren zweiten Positioniersystemen 15,16 des Fahrzeugs 10 gekoppelt. Die Anzahl der zweiten Positioniersysteme ist beliebig, es ist jedoch mindestens ein zweites Positioniersystem 15 oder 16 vorhanden.

Die Positioniersysteme 14-16 können insbesondere sogenannte absolute Positioniersysteme umfassen, welche eine absolute Positionsmessung liefern, beispielsweise in Form von Längengrad, Breitengrad und optional einer Höheninformation. Derartige Positioniersysteme 14-16 können beispielsweise satellitengestützte globale Positionsbestimmungssysteme, wie zum Beispiel GPS oder Galileo, umfassen. Alternativ oder zusätzlich können absolute Positioniersysteme optische Kamerasysteme, Laser-Sensoren, Lidar-Sensoren Radar-Sensoren oder Ultraschallsensoren umfassen, mit welchen ein zwei- oder dreidimensionales Abbild der Umgebung des Fahrzeugs erfasst wird. In dem Abbild der Umgebung werden Merkmale extrahiert, wie zum Beispiel Fahrstreifen oder Tiefenkanten. Diese Merkmale werden mit Merkmalen abgeglichen, welche in detaillierten Kartendaten abgelegt sind. Die Kartendaten umfassen zusätzlich globale Positionsinformationen zu diesen Merkmalen und aufgrund des Abgleichs kann eine relative Position des Fahrzeugs zu diesen Merkmalen und somit eine globale Position des Fahrzeugs auf der Grundlage dieser Sensordaten bestimmt werden.

Jede Positionsbestimmung der Positioniersysteme 14-16 weist üblicherweise eine gewisse Ungenauigkeit oder einen gewissen Fehler auf. Diese Ungenauigkeiten oder Fehler können durch die Datenerfassung, beispielsweise den Empfang von GPS-Signalen oder Lasersignalen, oder durch die Weiterverarbeitung, beispielsweise eine Filterung von GPS Signalen oder Abgleichverfahren von erfassten Umgebungsmerkmalen mit Umgebungsmerkmalen aus Karten, hervorgerufen werden. Nachfolgend werden daher Verfahren beschrieben werden, welche derartige Fehler verringern. Dabei ist zu beachten, dass Positionsmessungen von unterschiedlichen Positioniersystemen verwendet werden. Zwei Positioniersysteme können sich Beispielsweise dadurch unterscheiden, dass sie auf unterschiedlichen Informationen beruhen, beispielsweise auf Informationen von einem Lasersensor und auf Informationen von einem GPS Empfänger. Es ist jedoch auch möglich, dass sich zwei Positioniersysteme dadurch unterscheiden, dass sie dieselben Informationen auf unterschiedliche Arten und Weisen verarbeiten. Beispielsweise können Informationen von einem GPS Empfänger mit unterschiedlichen Filterverfahren verarbeitet werden und stellen im Sinne dieser Erfindung somit Positionsmessungen von unterschiedlichen Positioniersystemen dar. Ebenso können beispielsweise GPS Signale an zwei unterschiedlichen Stellen an dem Fahrzeug empfangen werden und somit zwei unterschiedliche Positioniersysteme darstellen. Schließlich können alternativ zu absoluten Positionsmessungen auch relative Positionsmessungen von entsprechenden Positioniersystemen verwendet werden. Relative Positionsmessungen können beispielsweise von Odometriesensoren des Fahrzeugs bereitgestellt werden, beispielsweise von einem Lenkwinkelsensor, einem Geschwindigkeitssensor und/oder einem Beschleunigungssensor. Vorzugsweise werden jedoch bei den nachfolgend beschriebenen Verfahren nur Positioniersysteme einer Klasse verwendet, also nur absolute Positioniersysteme oder nur relative Positioniersysteme.

Bevor auf das Verfahren der vorliegenden Erfindung im Detail eingegangen wird, wird zunächst die grundlegende Problemstellung bei der Kombination, einer sogenannten Fusion, von Positionsmessungen beschrieben werden.

Um die Genauigkeit und die Zuverlässigkeit einer Eigenpositionsschätzung zu verbessern, gibt es in Fahrzeugen mit automatischen Fahrfunktionen mehrere Positioniersysteme, welche Positionsmessungen liefern. Diese Positionsmessungen sind mit Unsicherheiten behaftet. Bei einer Fusion von Positionsmessungen wird häufig die Annahme getroffen, dass der Messfehler für die i-te Positionsmessung $z_i^w$ durch ein weißes Rauschen beschrieben werden kann. Eine mit weißem Rauschen behaftete Messung $z_i^w$ wird angenommen als

$$z_i^w = p_i + e_i^w \qquad (1)$$

wobei $p_i$ die wahre Position für die *i*-te Messung und $e_i^w$ der Messfehler der *i*-ten Positionsmessung ist. Hierbei wird $e_i^w = v_i^w$ mit $v_i^w \sim N(0, \Sigma_i^w)$ als weißes Rauschen modelliert. Eine Kovarianzmatrix

$$\Sigma_i^w = \begin{bmatrix} Cov(z_{i,1}^w, z_{i,1}^w) & \cdots & Cov(z_{i,1}^w, z_{i,d}^w) \\ \vdots & \ddots & \vdots \\ Cov(z_{i,d}^w, z_{i,1}^w) & \cdots & Cov(z_{i,d}^w, z_{i,d}^w) \end{bmatrix} \qquad (2)$$

bezeichnet dabei die räumliche Messungenauigkeit, $z_{i,d}^w$ den *d*-ten Vektoreintrag (zum Beispiel eines zweidimensionalen Vektors in X und Y Richtung oder eines dreidimensionalen Vektors in X, Y und Z Richtung) der *i*-ten Positionsmessung und *Cov*(·,·) die Kovarianz der beiden Funktionsargumente.

In der Praxis treten jedoch häufig Fälle auf, in denen der Messfehler auch von vorhergehenden Messfehlern abhängt, d.h., es liegt eine Autokorrelation vor. In diesem Fall gilt für eine Messung $z_i^a$ mit autokorreliertem Fehler:

$$z_i^a = p_i + e_i^a \qquad (3)$$

wobei sich $e_i^a$ durch eine diskrete Autokorrelation der Ordnung A als

$$e_i^a = \sum_{j=1}^{A} \gamma_j e_{i-j}^a + v_i^a \qquad (4)$$

beschreiben lässt. Hierbei ist $v_i^a \sim N(0, \sum_i^a)$ und $\gamma_j$ bezeichnet den j-ten Autokorrelationskoeffizienten. Insgesamt hängt der Fehler der *i*-ten Positionsmessung also nicht nur von der *i*-ten Messung ab, sondern auch von den A Positionsfehlern vorher. Ein solcher Fehler ist in der Praxis beispielsweise bei GPS Signalen zu beobachten, wenn zum Beispiel der enthaltene Fehler von Umweltfaktoren abhängt, welche über kurze Zeiträume konstant sind. Ebenso kann die in vielen Sensoren enthaltene Vorverarbeitung des Signals (z.B. ein Filtern mit einem Kalman-Filter) ein derartiges Fehlermodell künstlich erzeugen.

Wie bereits erwähnt, wird bei einer Datenfusion häufig die Annahme getroffen, dass sich die Fehler der Positionsmessungen wie in Gleichung (1) modellieren lassen. Daher ist eine Methode von Interesse, die Positionsmessungen wie in Gleichung (3) dahingehend verbessern, dass diese Annahme besser zutrifft. Diese Verbesserung bildet somit eine "Fehler-Dekorrelation" der Positionsmessungen. Falls autokorrelierte Fehleranteile außer Acht gelassen werden und nur weißes Rauschen angenommen wird, kann dies insbesondere bei Schätz- oder Optimierungsproblemen zu Fehlschätzungen oder zu einer zu niedrigen Unsicherheitsschätzung führen.

Im Folgenden wird daher eine Methode beschrieben, welche eine derartige Fehler-Dekorrelation bei Positionsmessungen der Art $z^a$ unter Berücksichtigung von Positionsmessungen der Art $z^w$ (ohne Kenntnis der genauen Art und Weise, wie diese Positionsmessungen erhoben worden sind) ermöglicht.

Bei dem Verfahren wird davon ausgegangen, dass eine Menge von Positionsmessungen $z^a = \{z_i^a\}_{i=1}^N$ , deren Fehler sich gemäß Gleichung (3) verhält, und eine Menge von Positionsmessungen $z^w = \{z_i^w\}_{i=1}^M$ , deren Fehler sich gemäß Gleichung (1) verhält, vorliegen. Positionsmessungen $z^a = \{z_i^a\}_{i=1}^N$ werden beispielsweise von dem ersten Positioniersystem 14 bereitgestellt. Die Positionsmessungen $z^w = \{z_i^w\}_{i=1}^M$ werden beispielsweise von dem zweiten Positioniersystem 15 bereitgestellt. Aus Gründen der Übersichtlichkeit wird davon ausgegangen, dass diese Messungen im gleichen Zeitraum vorliegen und für beide Positioniersysteme die i-te Messung den gleichen Zeitpunkt beschreibt. Dies kann ggf. durch eine einfache Vorverarbeitung mittels Pufferung und Interpolation erreicht werden. Außerdem wird davon ausgegangen, dass alle Positionsmessungen eindeutig einer von beiden Mengen $z^a$ oder $z^w$ zugeordnet werden kann. In der Praxis werden diese häufig von unterschiedlichen Positioniersystemen gemessen und können deshalb leicht unterschieden werden.

Für die gewünschte Fehler-Dekorrelation ist ein Autokorrelationsmodell der autokorrelierten Fehleranteile zu bestimmen. Da die Positionsmessungen üblicherweise zeitlich diskret vorliegen, kann ein diskretes Autokorrelationsmodell der Ordnung A für die Positionsfehler der Positionsmessung $z_i^a$ angenommen werden. Insbesondere sind die Modellordnung A und die entsprechenden Autokorrelationskoeffizienten $\gamma_j$ zu bestimmen.

Mithilfe einer vorab durchgeführten Autokorrelationsanalyse, einer sogenannten offline Autokorrelationsanalyse, kann die Ordnung A des Autokorrelationsmodells bestimmt werden. Bei der offline Autokorrelationsanalyse wird dazu ein Datensatz mit Positionsmessungen $z_i^a$ aufgezeichnet. Außerdem wird zusätzlich im gleichen Zeitraum ein Datensatz mit Referenzpositionsmessungen aufgezeichnet. Der Fehler $e_i^a$ wird nun zu jedem Zeitpunkt über die Differenz der Referenzpositionsmessungen und $z_i^a$ bestimmt. Dies ergibt eine zeitliche Abfolge des Positionsfehlers. Anschließend wird die Autokorrelationsfunktion von $e^a$ analysiert. Die Modellordnung A bestimmt sich beispielsweise aus dem größten Index der Autokorrelationskoeffizienten, deren Größenordnung signifikant von Null abweicht.

Auf der Grundlage der Modellordnung A kann das autoregressive Modell der entsprechenden Ordnung für die Zeitreihe der Positionsfehler $e^a$ bestimmt werden. Dazu sind verschiedene Verfahren in der Literatur bekannt. Das einfachste besteht im offline Verfahren darin, die bereits berechneten Autokorrelationskoeffizienten für $\gamma_j$ zu verwenden. Alternativ kann online ein Verfahren angewandt werden, welches z.B. auf den Yule-Walker Gleichungen, der Methode der kleinsten Quadrate oder der Burg-Methode beruht.

Unter Bezugnahme auf Figur 2 wird nachfolgend ein Verfahren 20 beschrieben, welches Positionsmessungen von dem ersten Positioniersystem 14 und Positionsmessungen von dem zweiten Positioniersystem 15 verwendet.

Zunächst wird eine ausreichende Menge von ersten Positionsmessungen $z_i^a$ von dem ersten Positioniersystem 14 im Schritt 21 zwischengespeichert. Im Schritt 22 wird eine ausreichende Menge von zweiten Positionsmessungen $z_i^w$ von dem zweiten Positioniersystem 15 zwischengespeichert. Eine Anzahl A (= Ordnung des Autokorrelationsmodells) von jeweils ersten Positionsmessungen und zweiten Positionsmessungen ist ausreichend.

Schließlich wird zum aktuellen Zeitpunkt eine dritte Positionsmessung $z_i^a$ von dem ersten Positioniersystemen 14 im Schritt 23 erfasst. Es ist zu beachten, dass die ersten Positionsmessungen und die zweiten Positionsmessungen zeitlich vor der dritten Positionsmessung erfolgen.

Nun wird im Schritt 24 für jeden vergangenen Zeitpunkt i eine Schätzung $\hat{e}_i^a$ des Positionsfehlers $e_i^a$ der Positionsmessung $z_i^a$ aus den Positionsmessungen $z_i^a$ und $z_i^w$ berechnet:

$$\hat{e}_i^a = z_i^a - z_i^w \tag{5}$$

Aus den folgenden Gleichungen (6) und (7) ist ersichtlich, dass die Schätzung $\hat{e}_i^a$ des Positionsfehlers $e_i^a$ der Differenz zwischen dem autokorrelierten Positionsfehler $e_i^a$ der jeweiligen ersten Positionsmessung und dem Positionsfehler $e_i^w$ der jeweiligen zweiten Positionsmessung entspricht.

$$\hat{e}_i^a = (p_i + e_i^a) - (p_i + e_i^w) \tag{6}$$

$$= e_i^a - e_i^w \tag{7}$$

Eine Anzahl von A Positionsfehlerschätzungen $\hat{e}_i^a$ wird ebenfalls zwischengespeichert.

Unter der Annahme, dass die Fehler der beiden Messungen nicht miteinander korreliert sind, verhalten sich die Fehlerschätzungen gemäß $\hat{e}_i^a \sim N(0, \sum^a + \sum^w)$, also weniger stark autokorreliert als die originale Positionsmessung $z_i^a$.

Die zwischengespeicherten A Positionsfehlerschätzungen können im Schritt 25 verwendet werden, um eine verbesserte Schätzung der Position $c_i^a$ zu bestimmen. Dazu werden die Autokorrelationsanteile des Positionsfehlers von der aktuell bestimmten dritten Positionsmessung $z_i^a$ gemäß folgender Gleichung subtrahiert:

$$c_i^a = z_i^a - \sum_{j=1}^{A} \gamma_j \, \hat{e}_{i-j}^a \tag{8}$$

Die nachfolgenden Gleichungen (9) bis (14) zeigen, dass der Positionsfehler dieser Schätzung $c_i^a - p_i$ (aus Gl. 14) nun ebenfalls mittels eines weißen Rauschens modelliert werden kann und es gilt Gleichung (15).

$$c_i^a = p_i + e_i^a - \sum_{j=1}^{A} \gamma_j \, \hat{e}_{i-j}^a \tag{9}$$

$$c_i^a = p_i + \sum_{j=1}^{A} \gamma_j \, e_{i-j}^a + v_i^a - \sum_{j=1}^{A} \gamma_j \, \hat{e}_{i-j}^a \tag{10}$$

$$c_i^a = p_i + \sum_{j=1}^{A} \gamma_j \, (e_{i-j}^a - \hat{e}_{i-j}^a) + v_i^a \tag{11}$$

$$c_i^a = p_i + \sum_{j=1}^{A} \gamma_j \left( e_{i-j}^a - e_{i-j}^a + e_{i-j}^w \right) + v_i^a \qquad (12)$$

$$c_i^a = p_i + \sum_{j=1}^{A} \gamma_j \, e_{i-j}^w + v_i^a \qquad (13)$$

$$c_i^a - p_i = \sum_{j=1}^{A} \gamma_j \, e_{i-j}^w + v_i^a \qquad (14)$$

$$c_i^a - p_i \sim N(0, \Sigma_i^a + \sum_{j=1}^{A} \gamma_j^2 \, \Sigma_{i-j}^w) \qquad (15)$$

Zusammenfassend wird ein Verfahren zur Dekorrelation von Positionsfehlern bereitgestellt. Dabei wird eine Menge von Positionsmessungen, deren Fehler autokorreliert ist, mit einer Menge von Positionsmessungen, deren Fehler durch weißes Rauschen bestimmt sind, verglichen. Daraus wird eine Position $c_i^a$ bestimmt, welche nur noch durch weißes Rauschen verfälscht ist.

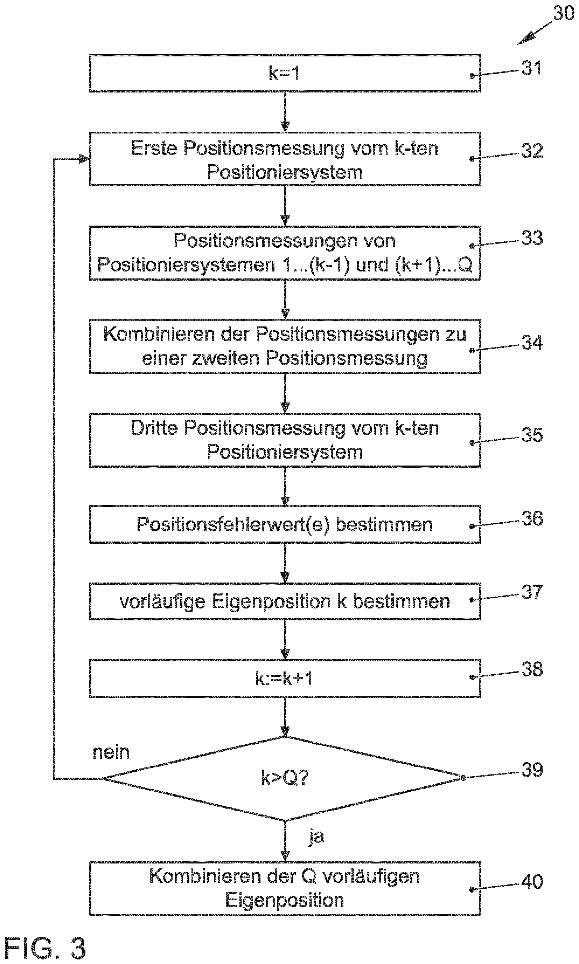

Unter Bezugnahme auf Figur 3 wird ein Verfahren 30 beschrieben, welches verwendet werden kann, wenn mindestens drei Positioniersysteme 14-16 zur Verfügung stehen. Die Positionsmessungen der drei Positioniersysteme 14-16 können beliebig mit zeitlich korrelierten Fehlern oder zeitlich unkorrelierten Fehlern behaftet sein. Es besteht jedoch keine Korrelation zwischen den Störungen der unterschiedlichen Positioniersysteme 14-16. Das Verfahren beruht auf dem unter Bezugnahme auf Figur 2 beschriebenen Verfahren. Die mindestens drei Positioniersysteme 14-16 liefern Positionsmessungen zu bestimmten Zeitpunkten i, wie es zuvor unter Bezugnahme auf Figur 2 beschrieben wurde. Die Anzahl der Positioniersysteme wird nachfolgend mit Q bezeichnet.

Einige Schritte des Verfahrens (Schritte 32-39) werden mehrfach durchlaufen, beispielsweise so oft, wie Positioniersysteme vorliegen, also beispielsweise Q mal. Da sich die Verwendung der verschiedenen Positioniersysteme 14-16 in den verschiedenen Durchläufen des Verfahrens ändert, werden die Positioniersysteme 14-16 von eins bis Q durchnummeriert.

Im Schritt 31 wird eine Laufvariable k auf den Wert 1 gesetzt. Wie aus der weiteren Beschreibung des Verfahrens ersichtlich sein wird, wird die Laufvariable k von 1 bis Q in den Q Durchläufen des Verfahrens hochgezählt.

Im Schritt 32 wird eine ausreichende Menge von ersten Positionsmessungen vom k-ten Positioniersystem zwischengespeichert. Im Schritt 33 wird eine ausreichende Menge von Positionsmessungen von den übrigen Positioniersystemen zwischengespeichert. Die übrigen Positioniersysteme umfassen alle Positioniersysteme außer dem k-ten Positioniersystem. Im Schritt 34 werden die Positionsmessungen der übrigen Positioniersysteme zu entsprechenden zweiten Positionsmessungen fusioniert. Dazu werden zu jedem Messzeitpunkt entsprechende Positionsmessungen der übrigen Positioniersysteme zu einer entsprechenden zweiten Positionsmessung fusioniert. Eine Anzahl A (= Ordnung des Autokorrelationsmodells des k-ten Positioniersystems) von jeweils ersten Positionsmessungen und zweiten Positionsmessungen ist ausreichend.

Schließlich wird zum aktuellen Zeitpunkt eine dritte Positionsmessung von dem k-ten Positioniersystemen im Schritt 35 erfasst. Es ist zu beachten, dass die ersten Positionsmessungen und die zweiten Positionsmessungen zeitlich vor der dritten Positionsmessung erfolgen.

Wie zuvor unter Bezugnahme auf Schritt 24 (Figur 2) beschrieben wurde, wird eine Schätzung des Positionsfehlers der dritten Positionsmessung im Schritt 36 bestimmt und im Schritt 37 eine entsprechende vorläufige Eigenposition k bestimmt. Die vorläufige Eigenposition kann auf gleiche Art und Weise wie die Eigenposition im Schritt 25 (Figur 2) bestimmt werden.

Im Schritt 38 wird die Laufvariable k um eins erhöht und das Verfahren wird beginnend mit dem Schritt 32 so lange fortgeführt, bis k größer als Q ist (Schritt 39). Insgesamt werden somit Q vorläufige Eigenpositionen bestimmt. Im Schritt 40 werden die Q vorläufigen Eigenpositionen zu einer fusionierten Eigenposition zusammengeführt. Der Fehlerterm der fusionierten Eigenposition kann keine höhere zeitliche Korrelation aufweisen als die maximale zeitliche Fehlerkorrelation über die Q vorläufigen Eigenpositionen hinweg. Dies ist dadurch bedingt, dass die Fehlerterme der verschiedenen Eigenpositionen keine Korrelation untereinander aufweisen.

**Bezugszeichenliste**

| 10 | Fahrzeug |
|---|---|
| 11 | Vorrichtung |
| 12 | Schnittstelle |
| 13 | Prozessor |
| 14 | erstes Positioniersystem |
| 15,16 | zweites Positioniersystem |
| 20 | Verfahren |
| 21-25 | Schritt |
| 30 | Verfahren |
| 31-40 | Schritt |

**Patentansprüche**

**1.** Verfahren zur Schätzung einer Eigenposition, welches umfasst:

- Bereitstellen von mindestens einer ersten Positionsmessung durch ein erstes Positioniersystem (14),
- Bereitstellen von mindestens einer zweiten Positionsmessung durch mindestens ein zweites Positioniersystem (15, 16),
- Bereitstellen einer dritten Positionsmessung durch das erste Positioniersystem (14), welche zeitlich nach der ersten und zweiten Positionsmessung erfolgt, und
- Schätzen der Eigenposition in Abhängigkeit von zumindest der dritten Positionsmessung und mindestens einem Positionsfehlerwert, welcher in Abhängigkeit von der mindestens einen ersten Positionsmessung und der mindestens einen zweiten Positionsmessung bestimmt wird,

**dadurch gekennzeichnet,**
**dass** das Verfahren ferner umfasst:

- Bereitstellen einer Autokorrelationsordnung A für Positionsmessungen von dem ersten Positioniersystem (14), und

**dass** die Eigenposition in Abhängigkeit von zumindest der dritten Positionsmessung und von A Positionsfehlerwerten geschätzt wird, welche in Abhängigkeit von A ersten Positionsmessungen und A zweiten Positionsmessungen bestimmt werden,
Bereitstellen von A Autokorrelationskoeffizienten, und
**dass** die Eigenposition ferner in Abhängigkeit von zumindest den A Autokorrelationskoeffizienten geschätzt wird,

wobei die Eigenposition $c_i^a$ gemäß der folgenden Gleichung geschätzt wird:

$$c_i^a = z_i^a - \sum_{j=1}^{A} \gamma_j \left( z_{i-j}^a - z_{i-j}^w \right)$$

mit:

der dritten Positionsmessung $z_i^a$ zum Zeitpunkt i;
den A Autokorrelationskoeffizienten $\gamma_i$;

den A ersten Positionsmessungen $z_{i-j}^a$ zu Zeitpunkten i-1 bis i-A; und

den A zweiten Positionsmessungen $z_{i-j}^w$ zu den Zeitpunkten i-1 bis i-A.

**2.** Verfahren nach Anspruch 1, **dadurch gekennzeichnet, dass** ein Positionsfehlerwert des mindestens einen Positionsfehlerwerts einen Differenzwert zwischen einer ersten Positionsmessung der mindestens einen ersten Positionsmessung und einer zweiten Positionsmessung der mindestens einen zweiten Positionsmessung umfasst.

**3.** Verfahren nach einem der vorhergehenden Ansprüche, **dadurch gekennzeichnet, dass** die dritte Positionsmessung, die mindestens eine erste Positionsmessung und die mindestens eine zweite Positionsmessung jeweils absolute Positionsmessungen umfassen, welche eine absolute geografische Position anzeigen.

**4.** Verfahren nach einem der Ansprüche 1-2, **dadurch gekennzeichnet, dass** die dritte Positionsmessung, die mindestens eine erste Positionsmessung und die mindestens eine zweite Positionsmessung jeweils relative Positionsmessungen umfassen, welche eine relative geografische Position in Bezug auf eine jeweilige vorhergehende Positionsmessung anzeigen.

**5.** Verfahren zur Schätzung einer Eigenposition unter Verwendung von Q Positionsbestimmungsquellen mit Q größer oder gleich 3, welches umfasst:

- Schätzen einer jeweiligen vorläufigen Eigenposition für jedes k von 1 bis Q gemäß dem Verfahren nach einem der vorhergehenden Ansprüche mit

der Positionsbestimmungsquelle k als das erste Positioniersystem, und
den Positionsbestimmungsquellen 1 bis Q ohne k als das mindestens eine zweite Positioniersystem indem die mindestens eine zweite Positionsmessung durch Kombinieren von Positionsmessungen der Positionsbestimmungsquellen 1 bis Q ohne k bestimmt wird, und

- Kombinieren der Q vorläufigen Eigenpositionen zu der Eigenposition.

**6.** Vorrichtung, welche umfasst:

- eine Schnittstelle (12), welche eingerichtet ist, Positionsmessungen von einem ersten Positioniersystem (14) und Positionsmessungen von mindestens einem zweiten Positioniersystem (15, 16) zu empfangen,
- mindestens einen Prozessor (13), der eingerichtet ist, das Verfahren nach einem der Ansprüche 1-5 durchzuführen.

**Claims**

**1.** Method for estimating an ego position, comprising:

- providing at least one first position measurement by way of a first positioning system (14),
- providing at least one second position measurement by way of at least one second positioning system (15, 16),
- providing a third position measurement by way of the first positioning system (14), at a time after the first and second position measurement, and
- estimating the ego position on the basis of at least the third position measurement and at least one position error value that is determined on the basis of the at least one first position measurement and the at least one second position measurement,

**characterized**
**in that** the method furthermore comprises:

- providing an autocorrelation order A for position measurements from the first positioning system (14), and in that the ego position is estimated on the basis of at least the third position measurement and A position error values that are determined on the basis of A first position measurements and A second position measurements, providing A autocorrelation coefficients, and
**in that** the ego position is furthermore estimated on the basis of at least the A autocorrelation coefficients, wherein the ego position $c_i^a$ is estimated according to the following equation:

$$c_i^a = z_i^a - \sum_{j=1}^{A} \gamma_j \left( z_{i-j}^a - z_{i-j}^w \right)$$

with:

the third position measurement $z_i^a$ at the time i;

the A autocorrelation coefficients $\gamma_j$;

the A first position measurements $z_{i-j}^a$ at times i-1 to 1-A; and

the A second position measurements $z_{i-j}^w$ at the times i-1 to 1-A.

2. Method according to Claim 1, **characterized in that** one position error value of the at least one position error value comprises a difference value between one first position measurement of the at least one first position measurement and one second position measurement of the at least one second position measurement.

3. Method according to either of the preceding claims, **characterized in that** the third position measurement, the at least one first position measurement and the at least one second position measurement each comprise absolute position measurements that indicate an absolute geographical position.

4. Method according to either of Claims 1-2, **characterized in that** the third position measurement, the at least one first position measurement and the at least one second position measurement each comprise relative position measurements that indicate a relative geographical position in relation to a respective previous position measurement.

5. Method for estimating an ego position using Q position determination sources with Q greater than or equal to 3, comprising:

- estimating a respective preliminary ego position for each instance of k from 1 to Q in accordance with the method according to one of the preceding claims, with the position determination source k as the first positioning system, and
the position determination sources 1 to Q without k as the at least one second positioning system by determining the at least one second position measurement by combining position measurements from the position determination sources 1 to Q without k, and
- combining the Q preliminary ego positions to form the ego position.

6. Device, comprising:

- an interface (12) that is configured to receive position measurements from a first positioning system (14) and position measurements from at least one second positioning system (15, 16),
- at least one processor (13) that is configured to perform the method according to one of Claims 1-5.

**Revendications**

1. Procédé permettant d'estimer une position propre, comprenant les étapes consistant à :

- fournir au moins une première mesure de position par un premier système de positionnement (14),
- fournir au moins une deuxième mesure de position par au moins un deuxième système de positionnement (15, 16),
- fournir une troisième mesure de position par le premier système de positionnement (14) qui est effectuée dans le temps après la première et la deuxième mesure de position, et
- estimer la position propre en fonction au moins de la troisième mesure de position et d'au moins une valeur d'erreur de position qui est déterminée en fonction de ladite au moins une première mesure de position et de ladite au moins une deuxième mesure de position,
**caractérisé en ce que** le procédé comprend en outre l'étape consistant à :

- fournir un ordre d'auto-corrélation A pour des mesures de position provenant du premier système de positionnement (14), et

**en ce que** la position propre est estimée en fonction au moins de la troisième mesure de position et de A valeurs d'erreur de position qui sont déterminées en fonction de A premières mesures de position et de A deuxièmes mesures de position,

fournir A coefficients d'auto-corrélation, et

**en ce que** la position propre est en outre estimée en fonction au moins des A coefficients d'auto-corrélation,

dans lequel la position propre $c_i^a$ est estimée selon l'équation suivante :

$$c_i^a = z_i^a - \sum_{j=1}^{A} \gamma_j \left( z_{i-j}^a - z_{i-j}^w \right)$$

où :

$z_i^a$ est la troisième mesure de position à l'instant i ;

$\gamma_i$ sont les A coefficients d'auto-corrélation ;

$z_{i-j}^a$ sont les A premières mesures de position aux instants i-1 à i-A ; et

$z_{i-j}^w$ sont les A deuxièmes mesures de position aux instants i-1 à i-A.

2. Procédé selon la revendication 1, **caractérisé en ce qu'**une valeur d'erreur de position de ladite au moins une valeur d'erreur de position comprend une valeur de différence entre une première mesure de position de ladite au moins une mesure de position et une deuxième mesure de position de ladite au moins une deuxième mesure de position.

3. Procédé selon l'une quelconque des revendications précédentes, **caractérisé en ce que** la troisième mesure de position, ladite au moins une première mesure de position et ladite au moins une deuxième mesure de position comprennent respectivement des mesures de position absolues qui indiquent une position géographique absolue.

4. Procédé selon l'une quelconque des revendications 1 à 2, **caractérisé en ce que** la troisième mesure de position, ladite au moins une première mesure de position et ladite au moins une deuxième mesure de position comprennent respectivement des mesures de position relatives qui indiquent une position géographique relative par rapport à une mesure de position précédente respective.

5. Procédé permettant d'estimer une position propre en utilisant Q sources de détermination de position, où Q est supérieur ou égal à 3, comprenant les étapes consistant à :

- estimer une position propre provisoire respective pour chaque k de 1 à Q selon le procédé selon l'une quelconque des revendications précédentes avec

la source de détermination de position k en tant que premier système de positionnement, et
les sources de détermination de position 1 à Q sans k en tant que ledit moins un deuxième système de positionnement en ce que ladite au moins une deuxième mesure de position est déterminée en combinant des mesures de position des sources de détermination de position de 1 à Q sans k, et

- combiner les Q positions propres provisoires en position propre.

6. Dispositif, comprenant :

- une interface (12) qui est conçue pour recevoir des mesures de position d'un premier système de positionnement (14) et des mesures de position d'au moins un deuxième système de positionnement (15, 16),
- au moins un processeur (13) qui est conçu pour exécuter le procédé selon l'une quelconque des revendications 1 à 5.

FIG. 1

| Erste Positionsmessung vom ersten Positioniersystem | 21 |
| Zweite Positionsmessung vom zweiten Positioniersystem | 22 |
| Dritte Positionsmessung vom ersten Positioniersystem | 23 |
| Positionsfehlerwert(e) bestimmen | 24 |
| Eigenposition bestimmen | 25 |

FIG. 2

```
                                                    ___ 30

              ┌──────────────────────────────────┐
              │              k=1                 │──── 31
              └──────────────────────────────────┘
                              │
                              ▼
              ┌──────────────────────────────────┐
              │  Erste Positionsmessung vom k-ten │──── 32
              │          Positioniersystem        │
              └──────────────────────────────────┘
                              │
                              ▼
              ┌──────────────────────────────────┐
              │     Positionsmessungen von       │──── 33
              │ Positioniersystemen 1...(k-1) und (k+1)...Q │
              └──────────────────────────────────┘
                              │
                              ▼
              ┌──────────────────────────────────┐
              │ Kombinieren der Positionsmessungen zu │──── 34
              │   einer zweiten Positionsmessung  │
              └──────────────────────────────────┘
                              │
                              ▼
              ┌──────────────────────────────────┐
              │  Dritte Positionsmessung vom k-ten │──── 35
              │          Positioniersystem        │
              └──────────────────────────────────┘
                              │
                              ▼
              ┌──────────────────────────────────┐
              │   Positionsfehlerwert(e) bestimmen │──── 36
              └──────────────────────────────────┘
                              │
                              ▼
              ┌──────────────────────────────────┐
              │ vorläufige Eigenposition k bestimmen │──── 37
              └──────────────────────────────────┘
                              │
                              ▼
              ┌──────────────────────────────────┐
              │             k:=k+1               │──── 38
              └──────────────────────────────────┘
                              │
                    nein      ▼
                    ◇────────────────◇
                    │     k>Q?       │──── 39
                    ◇────────────────◇
                              │ ja
                              ▼
              ┌──────────────────────────────────┐
              │   Kombinieren der Q vorläufigen   │──── 40
              │          Eigenposition           │
              └──────────────────────────────────┘
```

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69034047 T2
- EP 1988408 B1

- EP 0161688 A2

**In der Beschreibung aufgeführte Nicht-Patentliteratur**

- **A.C. ESCHER et al.** *GPS/IRS HYBRIDIZATION: DEFINITION OF EXCLUSION RADIUS USING SOLUTION SEPARATION METHOD,* 31. Dezember 2002